# EUROPEAN PATENT APPLICATION

(11) **EP 3 806 561 A1**
(43) Date of publication of application: **14.04.2021**
(21) Application number: 18921986.8
(22) Date of filing: 08.06.2018
(51) Int. Cl.: H04W 72/04, H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: YOSHIOKA, Shohei, Tokyo 100-6150 (JP); MATSUMURA, Yuki, Tokyo 100-6150 (JP); NAGATA, Satoshi, Tokyo 100-6150 (JP); LI, Huiling, Beijing 100190 (CN)
(74) Representative: Hoffmann Eitle
(86) International application number: PCT/JP2018/022093
(87) International publication number: WO 2019/234929

(57) **Abstract**

To appropriately control the deactivation of one or more activated SP-CSI reporting. In accordance with one aspect of the present disclosure, a user terminal has a receiving section that receives one or more configuration information regarding semi-persistent channel state information (CSI) reporting using an uplink shared channel, and a control section that controls at least one of deactivations of activated semi-persistent CSI reporting based on downlink control information (DCI) when one or more semi-persistent CSI reporting each corresponding to the one or more configuration information are activated.

## Description

### Technical Field

The present disclosure relates to a user terminal and a radio communication method in next-generation mobile communication systems.

### Background Art

In the Universal Mobile Telecommunications System (UMTS) network, the specifications of long-term evolution (LTE) have been drafted for the purpose of further increasing high speed data rates, providing lower delays and so on (see Non-Patent Literature 1). In addition, the specifications of LTE Advanced (LTE-A, LTE Rel. 10, 11, 12, 13) have been drafted for the purpose of further increasing the capacity and sophistication of LTE (LTE Rel. 8, 9).

Successor systems of LTE are also under study (also referred to as, for example, "Future Radio Access (FRA)," "5th generation mobile communication system (5G)," "5G+ (plus)," "New Radio (NR)," "New radio access (NX)," "Future generation radio access (FX)," "LTE Rel. 14" "LTE Rel. 15 or later versions" and so on).

In the existing LTE system (for example, LTE Rel. 8 to 13), the user terminal (User Equipment (UE)) periodically and/or aperiodically reports channel state information (CSI) to a base station. The UE reports the CSI by using an uplink control channel (Physical Uplink Control CHannel (PUCCH)) or an uplink shared channel (Physical Uplink Shared CHannel (PUSCH)).

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future wireless communication systems (for example, LTE Rel. 14, 15, and later versions, 5G, 5G+, New Radio, etc.), in addition to periodic CSI reporting and aperiodic CSI reporting, supporting semi-persistent (semi-permanent) CSI reporting is under consideration.

In the semi-persistent CSI reporting (SP-CSI reporting), activation and deactivation of transmission of CSI in a certain periodicity are controlled by a given trigger. For example, in the SP-CSI reporting using a PUSCH, the given trigger may be downlink control information (DCI). Further, a single piece of DCI may activate a single piece of SP-CSI reporting.

However, when one or more SP-CSI reporting corresponding to one or more DCI are activated at a certain timing, how to control deactivation of the one or more activated SP-CSI reporting becomes a problem.

It is therefore an object of the present disclosure to provide a user terminal and a radio communication method capable of appropriately controlling the deactivation of one or more activated SP-CSI reporting.

### Solution to Problem

In accordance with one aspect of the present disclosure, a user terminal has a receiving section that receives one or more configuration information regarding semi-persistent channel state information (CSI) reporting using an uplink shared channel, and a control section that controls at least one of deactivations of activated semi-persistent CSI reporting based on downlink control information (DCI) when one or more semi-persistent CSI reporting each corresponding to the one or more configuration information are activated.

### Advantageous Effects of Invention

According to an aspect of the present disclosure, the deactivation of one or more activated SP-CSI reporting can be appropriately controlled.

### Brief Description of Drawings

Fig. 1 illustrates an example of the case where a plurality of SP-CSI reporting are activated.
Fig. 2 is a diagram illustrating an example of control of first deactivation according to a first aspect.
Figs. 3A and 3B are diagrams illustrating an example of control of second deactivation according to the first aspect.
Figs. 4A and 4B are diagrams illustrating an example of control of third deactivation according to the first aspect.
Figs. 5A and 5B are diagrams illustrating an example of control of deactivation according to a second aspect.
Fig. 6 is a diagram illustrating an example of a schematic structure of a radio communication system according to the present embodiment.
Fig. 7 is a diagram illustrating an example of an overall structure of a radio base station according to the present embodiment.
Fig. 8 is a diagram illustrating an example of a functional structure of the radio base station according to the present embodiment.
Fig. 9 is a diagram illustrating an example of an overall structure of a user terminal according to the present embodiment.
Fig. 10 is a diagram illustrating an example of a functional structure of the user terminal according to the present embodiment.
Fig. 11 is a diagram illustrating an example of a hardware structure of the radio base station and the user terminal according to the present embodiment.

### Description of Embodiments

In future radio communication systems (for example, New Radio, and LTE Rel. 15 and later versions), a user terminal reports channel state information (CSI) to a radio base station. The user terminal may be referred to as, for example, a "User Equipment (UE)" and so on. Further, the radio base station may be referred to as a "Base Station (BS)," a "transmission/reception point (TRP)," an "eNodeB (eNB)," a "New Radio NodeB (gNB)" and so on, for example.

CSI is measured using a given reference signal (or a resource for the reference signal). The given reference signal (resource for the reference signal) may be, for example, a channel state information reference signal (CSI-RS), a CSI-RS resource, a synchronization signal/broadcast channel (SS/PBCH (physical broadcast channel)) block and so on.

The CSI-RS resource may include at least one of a non zero power (NZP) CSI-RS resource and a CSI-IM (Interference Management) resource. Further, the SS/PBCH block is a block including a primary synchronization signal (PSS), a secondary synchronization signal (SSS), and a PBCH, and is also referred to as an "SS block" and so on.

The CSI may include at least one of a channel quality indicator (CQI), a precoding matrix indicator (PMI), a CSI-RS resource indicator (CRI), a layer indication (LI), rank indication (RI), and a reference signal received power of a physical layer (L1) (L1-RSRP).

As CSI reporting methods, (1) periodic CSI (P-CSI) reporting, (2) aperiodic CSI (A-CSI) reporting, (3) semi-persistent (semi-permanent) CSI (SP-CSI) reporting, and so on are under study.

In SP-CSI reporting, at least one of frequency domain resources and time-domain resources for SP-CSI reporting (also referred to as "SP-CSI resources" and so on) is activated by a given trigger (also referred to as "activate," "activation" and so on). Then, the SP-CSI resource can be periodically used until the SP-CSI resource is deactivated (also referred to as "deactivate," "deactivation" and so on).

The SP-CSI resource allocation information may be transmitted from the radio base station to the user terminal by at least one of higher layer signaling and physical layer signaling (for example, DCI (Downlink Control Information)).

Here, the higher layer signaling may be, for example, any of radio resource control (RRC) signaling, medium access control (MAC) signaling, broadcast information and so on, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), or the like.

One or more configuration information regarding the SP-CSI reporting may be notified from the radio base station to the user terminal (for example, configured by higher layer signaling). The configuration information may also be referred to as a "CSI report configuration (CSI-ReportConfig)," a "trigger state of SP-CSI reporting using a PUSCH," a "list of the trigger state (CSI-SemiPersistentOnPUSCH-TriggerStateList)," a "SP-CSI report configuration," a "trigger state," a "report configuration," "report setting" and so on.

Each CSI report configuration (CSI-ReportConfig) may include at least one of a configuration ID (CSI-ReportConfigId), a report type (for example, SP-CSI, A-CSI, P-CSI and so on), a SP-CSI report periodicity (ReportPeriodicity), offset (ReportSlotOffset), and information (CSI-ResourceConfigId) indicating which reference signal (or resource) is used to report measured SP-CSI.

When receiving a first trigger (activation signal), the user terminal can periodically perform at least one of the SP-CSI measurement using a given reference signal (or, a resource for the reference signal) and the SP-CSI reporting using a SP-CSI resource. The user terminal may stop at least one of the SP-CSI measurement and the SP-CSI reporting when receiving a second trigger (deactivation signal) or when a given timer is expired.

The SP-CSI reporting may be transmitted using a primary cell (PCell), a primary secondary cell (PSCell), a PUCCH secondary cell (PUCCH SCell), and other cells (for example, secondary cell).

The activation/deactivation signal of the SP-CSI reporting may be notified using, for example, MAC signaling (for example, MAC CE), or physical layer signaling (for example, downlink control information (DCI)).

Note that the SP-CSI reporting may be transmitted using either one or both of a PUCCH and a PUSCH. Which one is used for transmission may be set from the gNB to the user terminal by RRC signaling, may be designated by MAC CE and so on, or may be notified by DCI.

The channel for the SP-CSI reporting may be determined based on an activation signal of the SP-CSI reporting. For example, SP-CSI reporting using a PUCCH (which may also be referred to as "PUCCH-based SP-CSI reporting") may be activated by MAC CE, or SP-CSI reporting using a PUSCH (which may also be referred to as "PUSCH-based SP-CSI reporting") may be activated (triggered) by DCI.

The DCI for SP-CSI reporting may be DCI in which the cyclic redundancy check (CRC) bits masked (scrambled) (CRC-scrambled) by a radio network temporary identifier (RNTI) for SP-CSI reporting. The RNTI for SP-CSI reporting is also referred to as "SP-CSI-RNTI (Semi-Persistent CSI RNTI)," "SP-CSI C-RNTI (SP-CSI Cell-RNTI)," "CSI-RNTI" and so on.

If the specific field of the DCI (for example, DCI format 0_1) CRC-scrambled by a specific RNTI (for example, SP-CSI-RNTI) is a given value, the user terminal may assume that the DCI is used for activation or deactivation of SP-CSI reporting (for example, PUSCH-based SP-CSI reporting).

For example, the user terminal may assume the DCI that satisfies the following to be activation DCI for SP-CSI reporting:
- Hybrid Automatic Repeat reQuest (HARQ) process number (HARQ Process Number (HPN)) fields are all set to '0'.
- The redundancy version (RV) field is set to '00'.

The user terminal may assume a DCI format 0_1 that satisfies the following to be deactivation DCI for SP-CSI reporting:
- HPN fields are all set to '0'.
- Modulation and coding scheme (MCS) fields are all set to '1'.
- In the frequency domain resource (for example, resource block (physical resource block (PRB))) allocation (resource allocation (Resource Assignment (RA))) field, (1) when a higher layer configures only RA type 0, all are set to '0', (2) when the higher layer configures only RA type 1, all are set to '1', and (3) when the higher layer configures a dynamic switch of the RA types 0 and 1, and the most significant bit (MSB) is '0', all are set to '0', and if not, all are set to '1'.
- A RV field is set to '00'.

The activation DCI may activate one or more trigger states configured by higher layer signaling. Here, the trigger state (SP-CSI trigger state) may be associated with the CSI report configuration regarding SP-CSI reporting. The CSI report configuration associated with the trigger state may be identified by the configuration ID (CSI-ReportConfigId) .

The user terminal may control activation of the SP-CSI reporting based on a correspondence relationship between a value of a given field (for example, CSI request field) included in the activation DCI and a trigger state. The correspondence relationship may be defined by specifications or may be configured by higher layer signaling (for example, RRC signaling).

For example, code points (values indicated by bits) in the CSI request field may each be associated with one or more CSI report configurations. Specifically, the code point of the CSI request field may indicate the configuration ID (CSI-ReportConfigId) of the CSI report configuration. Note that the code point may not include a code point indicating "no CSI request."

The size (number of bits) of the CSI request field may be the same as the size of the CSI request field (which may be referred to as "ReportTriggerSize") configured by higher layer signaling (for example, RRC signaling). The size of the configured CSI request field may correspond to the size of the CSI request field for DCI format 0_1. The "ReportTriggerSize" may be, for example, any number of bits (1, 2, 3, 4,...).

Note that the CSI request field for SP-CSI activation and the CSI request field for A-CSI trigger may have the same size. The number of SP-CSI trigger states and the number of A-CSI trigger states may be the same or different.

Now, in the PUSCH-based SP-CSI reporting, it may be allowed that multiple SP-CSI reporting (a plurality of trigger states) each corresponding to a plurality of CSI report configurations (CSI-ReportConfig) are active at the same time.

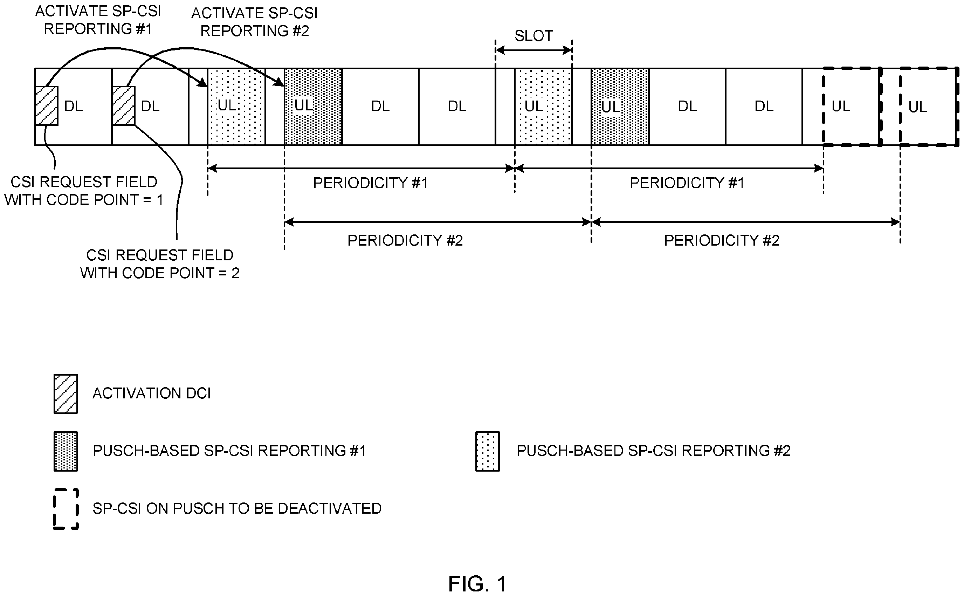

Fig. 1 illustrates an example of the case where multiple SP-CSI reporting are activated. For example, Fig. 1 indicates an example in which the code points "1" and "2" of the CSI request field correspond to CSI report configurations #1 and #2, respectively. Note that the values, cycles and so on shown in Fig. 1 are merely examples, and are not limited to those indicated in Fig. 1.

In Fig. 1, the user terminal monitors (also referred to as "blind decoding") a downlink control channel (for example, Physical Downlink Control Channel (PDCCH)) candidate (also referred to as a "search space" and so on) to detect DCI (for example, DCI format 0_1), which is CRC-scrambled by a specific RNTI (for example, SP-CSI-RNTI).

Further, the user terminal may determine whether or not the DCI is the activation DCI, based on the value of a given field in the DCI. For example, if the HPN field values in the DCI are all set to '0', and the RV field in the DCI is set to '00', the user terminal may determine that the DCI is the activation DCI.

The user terminal activates the SP-CSI reporting (also referred to as "CSI report configuration" or "trigger state") corresponding to the code point of the CSI request field in the activation DCI. For example, in Fig. 1, SP-CSI reporting #1 is activated by DCI including the CSI request field with code point "1." Similarly, the DCI including the CSI request field with code point "2" activates SP-CSI reporting #2.

As described above, SP-CSI reporting #1 and #2 correspond to different CSI report configurations #1 and #2, respectively. The CSI report configurations # 1 and # 2 may each include information indicating the SP-CSI report periodicity (ReportPeriodicity) (for example, in Fig. 1, periodicity # 1 and # 2), offset (ReportSlotOffset), SP-CSI measurement resources (CSI-ResourceConfig) to be reported, and so on.

In Fig. 1, the user terminal uses the PUSCH scheduled by the DCI including the CSI request field with code point "1" to transmit the SP-CSI measured using the CSI resource specified in the CSI report configuration #1 in the periodicity #1.

Similarly, the user terminal uses the PUSCH scheduled by the DCI including the CSI request field with the code point "2" to transmit the SP-CSI measured using the CSI resource specified in the CSI report configuration #2 in the periodicity #2.

Note that, in Fig. 1, frequency domain resources allocated to a PUSCH (for example, one or more resource blocks (physical resource block (PRB))) may be designated by a given field of the DCI (for example, frequency domain resource allocation field). Further, a time domain resource (for example, one or more symbols) allocated to the PUSCH may be designated by a given field (for example, time domain resource field) in the DCI.

Thus, the problem is how to control the deactivation of the one or more SP-CSI reporting when one or more SP-CSI reporting each corresponding to one or more CSI report configurations (also referred to as "CSI-ReportConfig," "trigger status," "configuration information" and so on) are activated.

Therefore, the present inventors have studied a method for appropriately controlling the deactivation of one or more activated SP-CSI reporting based on the deactivation DCI, and led to the present invention.

Now, the present embodiment will be described below in detail with reference to the drawings. The respective aspects may be applied independently or may be applied in combination. Further, in the following, "SP-CSI reporting" is assumed to be PUSCH-based SP-CSI reporting, but it is not limited thereto. The present embodiment is applicable to any SP-CSI reporting whose activation or deactivation is controlled using DCI.

### (First Aspect)

In the first aspect, the user terminal controls at least one deactivation of one or more activated SP-CSI reporting based on the deactivation DCI.

Here, activation or deactivation of "SP-CSI reporting" may be replaced by activation or deactivation of a "trigger state", a "CSI report configuration" and so on.

Further, the deactivation DCI is a DCI (for example, DCI format 0_1) used for deactivating the activated SP-CSI reporting. The deactivating DCI may be CRC-scrambled with a specific RNTI (for example, SP-CSI-RNTI).

When detecting a DCI that is CRC-scrambled by a specific RNTI, the user terminal may determine whether or not the DCI is the deactivation DCI based on the value of a given field in the DCI. As described above, when the HPN values in the DCI are all set to '0', the RV field in the DCI is set to '00', and the frequency domain resource allocation field is set to a given value, the user terminal may determine that the DCI is the deactivation DCI.

### <First Deactivation>

In the first deactivation, a single piece of deactivation DCI may deactivate a single piece of SP-CSI reporting.

Specifically, the user terminal may deactivate a single CSI report configuration indicated by the value of the CSI request field (first field) in the deactivation DCI.

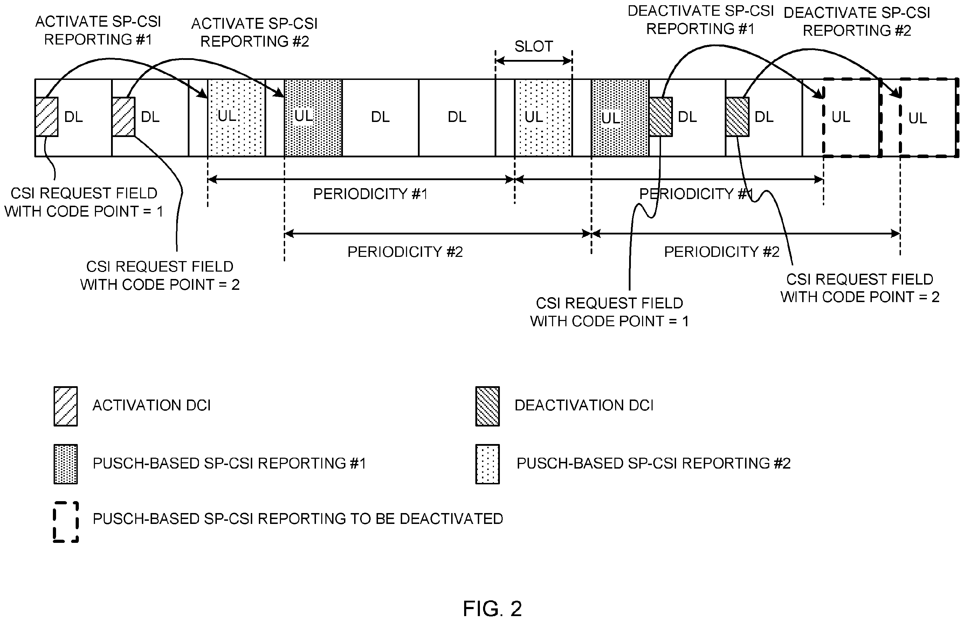

Fig. 2 is diagrams illustrating an example of control of the first deactivation according to the first aspect. Note that, as in Fig. 1, Fig. 2 illustrates the case where the SP-CSI reporting #1 and #2 corresponding to the CSI report configurations #1 and #2, respectively, are activated. Differences from Fig. 1 will be mainly described below.

As illustrated in Fig. 2, the user terminal may deactivate the SP-CSI reporting corresponding to the code point of the CSI request field in the deactivation DCI. For example, in Fig. 2, the SP-CSI reporting #1 is deactivated by the deactivation DCI including the CSI request field with code point "1". Similarly, the SP-CSI reporting #2 is deactivated by the deactivation DCI including the CSI request field with code point "2".

In the first deactivation, the value of the CSI request field of the deactivation DCI specifies the SP-CSI reporting to be deactivated, such that the user terminal can easily identify the SP-CSI reporting to be deactivated.

### <Second Deactivation>

In the second deactivation, a single deactivation DCI may deactivate one or more SP-CSI reporting (for example, a single piece of the SP-CSI reporting or all activated SP-CSI reporting).

Specifically, when the value of the CSI request field in the deactivation DCI is a specific value (for example, '0'), or when the value of the CSI request field indicates the CSI report configuration in which the value of the CSI request field is not activated, the user terminal may deactivate all activated CSI report configurations.

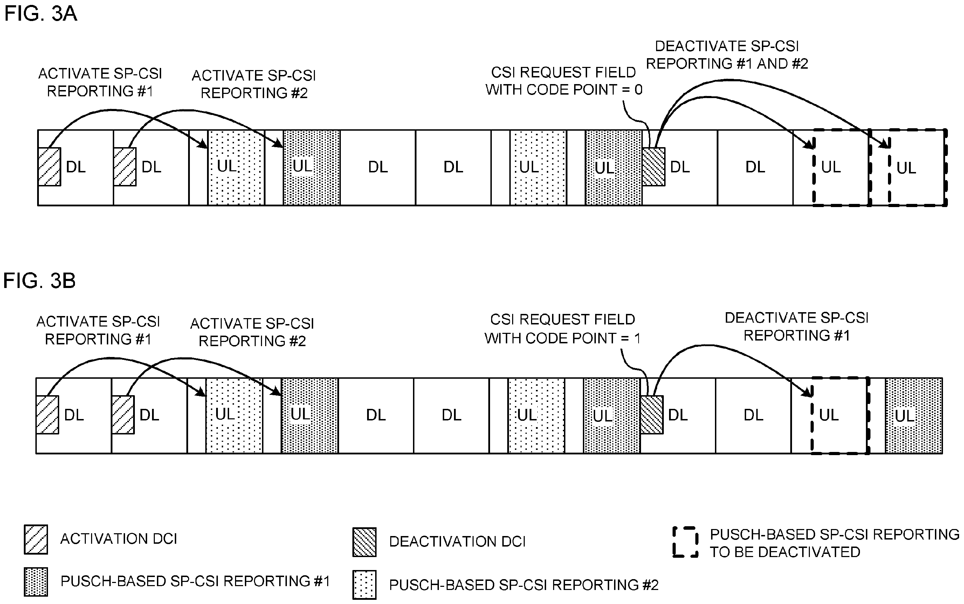

Figs. 3A and 3B are diagrams illustrating an example of control of the second deactivation according to the first aspect. Note that, as in Fig. 1, Figs. 3A and 3B illustrate the case where the SP-CSI reporting #1 and #2 corresponding to the CSI report configurations #1 and #2, respectively, are activated. Differences from Fig. 1 will be mainly described below.

As illustrated in Fig. 3A, when the value of the CSI request field in the detected deactivation DCI is a specific value (for example, '0') (all bit values are '0'), the user terminal, may deactivate all the activated SP-CSI reporting (here, SP-CSI reporting #1 and #2).

On the other hand, as illustrated in Fig. 3B, when the value of the detected CSI request field in the deactivation DCI is not a specific value (for example, '0'), the user terminal may deactivate the SP-CSI reporting corresponding to the code point of the CSI request field. For example, in Fig. 3B, the user terminal may deactivate the SP-CSI reporting #1 corresponding to the code point '1' of the CSI request field of the activated SP-CSI reporting #1 and #2.

Further, if the SP-CSI reporting corresponding to the code point of the CSI request field is not activated, the user terminal may deactivate all the activated SP-CSI reporting (here, SP-CSI reporting #1 and #2).

In the second deactivation, since the value of the CSI request field of a single piece of deactivation DCI can deactivate all or one piece of SP-CSI reporting that has been activated, the deactivation of one or more SP-CSI reporting can be more flexibly controlled.

### <Third Deactivation>

In the third deactivation, a single piece of deactivation DCI may deactivate one or more SP-CSI reporting (for example, a single piece of the SP-CSI reporting or all activated SP-CSI reporting).

Specifically, when a specific field (second field) in the deactivation DCI has a first value, the user terminal deactivates all activated SP-CSI reporting, and when the specific field has a second value, the user terminal may deactivate a part of the activated SP-CSI reporting based on the value of the CSI request field (first field) in the deactivation DCI.

The specific field may be, for example, at least one of the following fields:
- a field indicating the presence or absence of a transport channel (uplink-shared channel (UL-SCH)) corresponding to a PUSCH (UL-SCH field),
- a field indicating whether or not the data is the first transmission data (new data indicator (NDI) field),
- a field indicating a first downlink assignment index (DAI) (first DAI field),
- a field indicating a sounding reference signal (SRS) (SRS identifier field),
- a request field of SRS, a field indicating information about a code block group (CBG) including one or more code blocks (CBs) (CBG transmission information (TI) field), and
- a field indicating an association between a phase tracking reference signal (PTRS) and a demodulation reference signal (DMRS). (PTRS-DMRS association field)

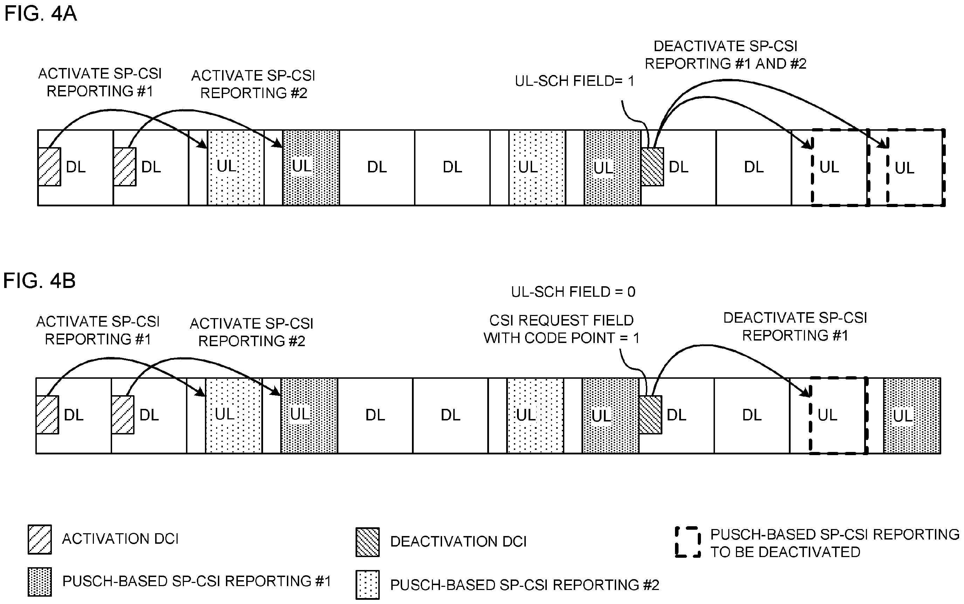

Figs. 4A and 4B are diagrams illustrating an example of control of third deactivation according to the first aspect. Note that, as in Fig. 1, Figs. 4A and 4B illustrate the case where the SP-CSI reporting #1 and #2 corresponding to the CSI report configurations #1 and #2, respectively, are activated. Differences from Fig. 1 will be mainly described below.

Further, Figs. 4A and 4B show an example in which the specific field in the deactivation DCI is the UL-SCH field in DCI format 0_1, but it may be another field as described above.

As illustrated in Fig. 4A, the user terminal, if the value of the UL-SCH field in the detected deactivation DCI is a first value (for example, '1'), all the activated SP-CSI reporting (here, SP-CSI reporting #1 and #2) may be deactivated.

On the other hand, as illustrated in Fig. 4B, when the value of the detected UL-SCH field in the deactivation DCI is a second value (for example, '0'), the user terminal may deactivate the SP-CSI reporting corresponding to the code point of the CSI request field. For example, in Fig. 4B, the user terminal may deactivate the SP-CSI reporting #1 corresponding to the code point '1' of the CSI request field among the activated SP-CSI reporting #1 and #2.

In the third deactivation, since the combination of the specific field and the CSI request field of a single deactivation DCI can deactivate all or one piece of SP-CSI reporting that has been activated, the deactivation of one or more SP-CSI reporting can be more flexibly controlled.

### <Fourth Deactivation>

The fourth deactivation describes the control of the deactivation of part of the activated SP-CSI reporting.

Specifically, if the value of the CSI request field of the CSI request field in the deactivation DCI is not a specific value (for example, '0') (all bit values are 0), a plurality of SP-CSI reporting corresponding to the code point of the CSI request field may be deactivated. In the second deactivation above, values other than a specific value in the CSI request field (for example, '0') may correspond to a single piece of SP-CSI reporting, but may correspond to one or more SP-CSI reporting.

Alternatively, when the value of the specific field (refer to the third deactivation) in the deactivation DCI is the second value (for example, '0'), a plurality of CSI report configurations specified by a combination of one or more fields other than the specific field may be deactivated. In the above-described third deactivation, when the value of the specific field is the second value, a single piece of SP-CSI reporting corresponding to the value of the CSI request field is deactivated, but multiple SP-CSI reporting specified by a combination of the CSI request field and another field may be deactivated.

In the fourth deactivation control, since the combination of the specific field and the CSI request field of a single piece of deactivation DCI can deactivate all or one or more SP-CSI reporting that has been activated, the deactivation of one or more SP-CSI reporting can be more flexibly controlled.

As described above, in the first aspect, the given field of a single piece of deactivation DCI specifies which SP-CSI reporting is to be deactivated in SP-CSI reporting units, and therefore the deactivation of one or more SP-CSI reporting can be flexibly controlled.

### (Second Aspect)

In the first aspect, an example in which deactivation is controlled in SP-CSI reporting units when one or more SP-CSI reporting are activated has been described. In the second aspect, when one or more SP-CSI reporting are activated, an example of controlling deactivation in a component carrier (CC) or a bandwidth part (BWP) unit will be described. The second aspect will describe mainly differences from the first aspect.

In the second aspect, the user terminal may deactivate all activated SP-CSI configurations in all or one of CCs or BWPs configured or activated in the user terminal based on the deactivation DCI.

Here, the CC is also referred to as a "cell" (which may include at least one of PCell, PSCell, and SCell), a "serving cell," a "system bandwidth" and so on. One or more CCs are configured for the user terminal, and carrier aggregation or dual connectivity is performed. At least one CC among the configured CCs may be activated.

The BWP is a partial band configured in the CC. One or more BWPs may be configured in one CC. Further, the BWP may include a BWP for uplink (uplink BWP) and a BWP for downlink (downlink BWP). The user terminal may activate at least one downlink BWP among the one or more configured downlink BWPs. Further, the user terminal may activate at least one uplink BWP among the one or more configured uplink BWPs.

The above-described CSI report configuration (also referred to as "CSI-ReportConfig," "trigger state," "configuration information" and so on) may be associated with the CC or BWP.

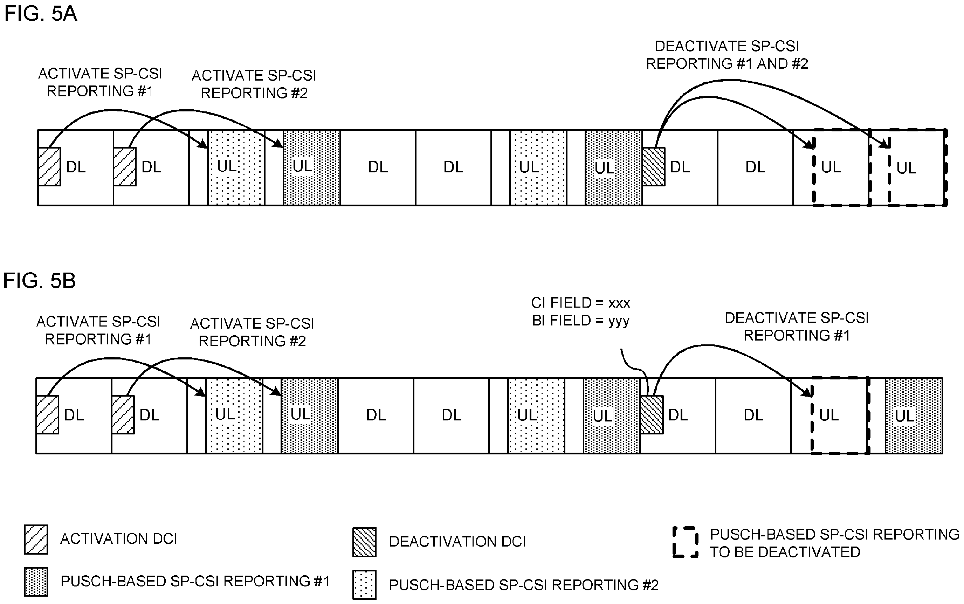

Figs. 5A and 5B are diagrams illustrating an example of control of deactivation according to a second aspect. Note that, as in Fig. 1, Figs. 5A and 5B illustrate the case where the SP-CSI reporting #1 and #2 corresponding to the CSI report configurations #1 and #2, respectively, are activated. Differences from Fig. 1 will be mainly described below.

As illustrated in Fig. 5A, when deactivation DCI is detected, in all CCs or all BWPs configured (or activated) on the user terminal, the user terminal may deactivate all activated SP-CSI reporting (here SP-CSI reporting # 1 and # 2) .

On the other hand, as illustrated in Fig. 5B, when deactivation DCI is detected, the user terminal may deactivate all activated CSI report configurations (here, CSI report configuration # 1) in the CC indicated by a carrier indicator (CI) field in the deactivation DCI, or in the BWP indicated by the bandwidth part indicator (BI) field in the deactivation DCI.

For example, in Fig. 5B, all activated SP-CSI reporting may be deactivated at CC "xxx" indicated by the CI field in the deactivation DCI. Alternatively, all activated SP-CSI reporting may be deactivated in BWP "yyy" indicated by the BI field in the deactivation DCI.

As described above, in the first aspect, a given field in a single piece of the deactivation DCI specifies in which CC or BWP unit the SP-CSI reporting is to be deactivated, and therefore the deactivation of one or more the SP-CSI reporting can be easily controlled.

### (Other Aspects)

The first and second aspects will describe a combination. In Fig. 5B of the second aspect, in the CC indicated by the CI field in the deactivation DCI or the BWP indicated by the BI field, all SP-CSI reporting that are activated are supposed to be deactivated, but not limited thereto.

For example, in Fig. 5B of the second aspect, by combining the first to fourth deactivations of the first aspect, in the CC indicated by the CI field or the BWP indicated by the BI field, which SP-CSI reporting is deactivated may be specified by at least one of the value of the CSI request field, or the value of the above-described specific field (refer to the third deactivation).

### (Radio Communication System)

Now, the structure of a radio communication system according to the present embodiment will be described below. In this radio communication system, communication is performed using one or a combination of the radio communication methods according to the embodiments of the present disclosure.

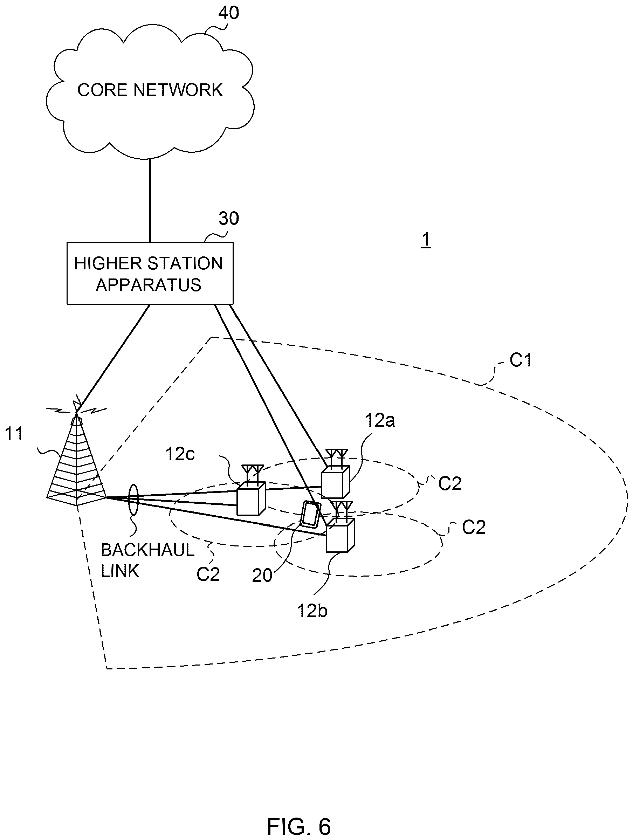

Fig. 6 is a diagram illustrating an example of a schematic configuration of a radio communication system according to the present embodiment. A radio communication system 1 can adopt at least one of carrier aggregation (CA) and dual connectivity (DC) to group a plurality of fundamental frequency blocks (component carriers) into one, where the LTE system bandwidth (for example, 20 MHz) constitutes one unit.

Note that the radio communication system 1 may be referred to as "Long Term Evolution (LTE)," "LTE-Advanced (LTE-A)," "LTE-Beyond (LTE-B)," "SUPER 3G," "IMT-Advanced," "4th generation mobile communication system (4G)," "5th generation mobile communication system (5G)," "New Radio (NR)," "Future Radio Access (FRA)," "New-RAT (Radio Access Technology)," and so on, or may be referred to as a system to implement these.

The radio communication system 1 includes a radio base station 11 that forms a macro cell C1 covering a relatively wide coverage, and radio base stations 12 (12a to 12c) that are placed within the macro cell C1 and that form small cells C2, which are narrower than the macro cell C1. In addition, user terminals 20 are placed in the macro cell C1 and in each small cell C2. The arrangement, number and so on of cells and user terminals 20 are not limited to those illustrated in the drawings.

The user terminals 20 can connect with both the radio base station 11 and the radio base stations 12. It is assumed that the user terminals 20 use the macro cell C1 and the small cells C2 at the same time using CA or DC. Furthermore, the user terminals 20 may apply CA or DC using a plurality of cells (CCs).

Between the user terminals 20 and the radio base station 11, communication can be carried out using a carrier of a relatively low frequency band (for example, 2 GHz) and a narrow bandwidth (referred to as an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

Moreover, the user terminals 20 can perform communication in each cell using at least one of time division duplex (TDD) and frequency division duplex (FDD). Further, in each cell (carrier), a single numerology may be applied, or a plurality of different numerologies may be applied.

The numerology may be a communication parameter applied to at least one of transmission and reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain and so on.

For example, for a certain physical channel, when at least one of the subcarrier spacing of the constituent OFDM symbols and the numbers of OFDM symbols is different, this case may be described that the numerology is different.

The radio base station 11 and the radio base station 12 (or between two radio base stations 12) may be connected by wire (for example, means in compliance with a common public radio interface (CPRI) such as optical fiber, an X2 interface, and so on) or wirelessly.

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Further, each radio base station 12 may be connected to the higher station apparatus 30 via the radio base station 11.

Note that the radio base station 11 is a radio base station having a relatively wide coverage, and may be referred to as a "macro base station," an "aggregate node," an "eNodeB (eNB)," a "transmitting/receiving point" and so on. Further, the radio base stations 12 are radio base stations having local coverages, and may be referred to as "small base stations," "micro base stations," "pico base stations," "femto base stations," "Home eNodeBs (HeNBs)," "Remote Radio Heads (RRHs)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and at least one of single carrier frequency division multiple access (SC-FDMA) and OFDMA is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and other radio access schemes can be used as well.

In the radio communication system 1, a downlink shared channel (Physical Downlink Shared CHannel (PDSCH)), which is used by each user terminal 20 on a shared basis, a broadcast channel (Physical Broadcast CHannel (PBCH)), downlink control channels and so on are used as downlink channels. User data, higher layer control information and System Information Blocks (SIBs) are transmitted in the PDSCH. Further, Master Information Blocks (MIBs) are transmitted by the PBCH.

The downlink control channels include a Physical Downlink Control CHannel (PDCCH), an Enhanced Physical Downlink Control CHannel (EPDCCH), a Physical Control Format Indicator CHannel (PCFICH), a Physical Hybrid-ARQ Indicator CHannel (PHICH) and so on. Downlink control information (DCI), including at least one of PDSCH scheduling information and PUSCH scheduling information is transmitted by the PDCCH.

DCI that schedules receipt of DL data may also be referred to as "DL assignment," and DCI that schedules transmission of UL data may also be referred to as "UL grant."

The number of OFDM symbols to use for the PDCCH may be communicated by the PCFICH. Hybrid Automatic Repeat reQuest (HARQ) delivery acknowledgment information (also referred to as, for example, "retransmission control information," "HARQ-ACKs," "ACK/NACKs" and so on) in response to the PUSCH may be communicated by the PHICH. The EPDCCH is frequency-division-multiplexed with the PDSCH (downlink shared data channel) and used to communicate DCI and so on, like the PDCCH.

In the radio communication system 1, an uplink shared channel (Physical Uplink Shared CHannel (PUSCH)), which is used by each user terminal 20 on a shared basis, an uplink control channel (Physical Uplink Control CHannel (PUCCH)), a random access channel (Physical Random Access CHannel (PRACH)) and so on are used as uplink channels. User data, higher layer control information, and so on are communicated by the PUSCH. Further, in the PUCCH, downlink radio quality information (Channel Quality Indicator (CQI)), delivery acknowledgment information, scheduling requests (SRs) and so on are communicated. By means of the PRACH, random access preambles for establishing connections with cells are communicated.

In the radio communication systems 1, cell-specific reference signals (CRSs), channel state information reference signals (CSI-RSs), demodulation reference signals (DMRSs), positioning reference signals (PRSs) and so on are communicated as downlink reference signals. Further, in the radio communication system 1, measurement reference signals (Sounding Reference Signals (SRSs)), demodulation reference signals (DMRSs), and so on are communicated as uplink reference signals. Note that, DMRSs may be referred to as "user terminal-specific reference signals (UE-specific Reference Signals)." Further, the reference signals to be communicated are by no means limited to these.

### <Radio Base Station>

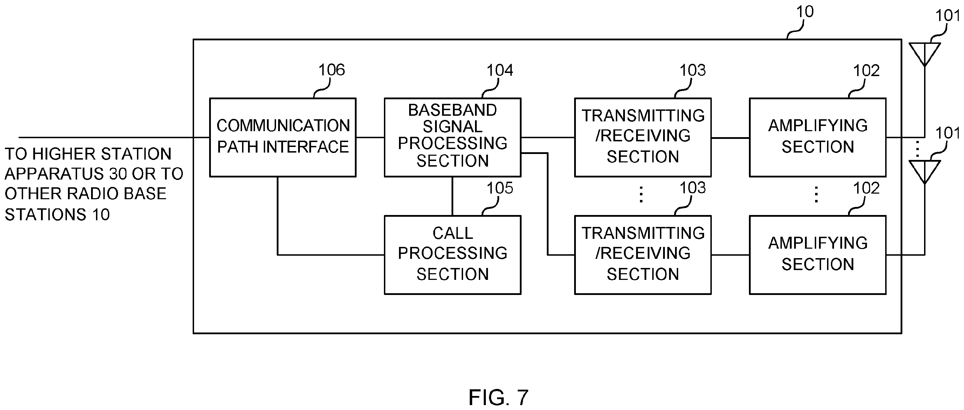

Fig. 7 is a diagram illustrating an example of an overall structure of a radio base station according to the present embodiment. Each radio base station 10 has a plurality of transmitting/receiving antennas 101, amplifying sections 102, transmitting/receiving sections 103, a baseband signal processing section 104, a call processing section 105, and a communication path interface 106. Note that one or more transmitting/receiving antennas 101, amplifying sections 102 and transmitting/receiving sections 103 may be provided.

User data to be transmitted from the radio base station 10 to the user terminal 20 on the downlink is input from the higher station apparatus 30 to the baseband signal processing section 104, via the communication path interface 106.

In the baseband signal processing section 104, the user data is subjected to transmission processes, including a Packet Data Convergence Protocol (PDCP) layer process, division and coupling of the user data, Radio Link Control (RLC) layer transmission processes such as RLC retransmission control, Medium Access Control (MAC) retransmission control (for example, a Hybrid Automatic Repeat reQuest (HARQ) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to the transmitting/receiving sections 103.

Each of the transmitting/receiving sections 103 converts a baseband signal, which is pre-coded for each antenna and output from the baseband signal processing section 104, into a signal in a radio frequency band, and transmits such a radio frequency signal. A radio frequency signal subjected to the frequency conversion in each transmitting/receiving section 103 is amplified in the amplifying section 102, and transmitted from each transmitting/receiving antenna 101. The transmitting/receiving sections 103 can be constituted by a transmitter/receiver, a transmitting/receiving circuit or transmitting/receiving apparatus that can be described based on general understanding of the technical field to which the present disclosure pertains. Note that the transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as configuration and releasing) for communication channels, manages states of the radio base stations 10, manages the radio resources, and so on.

The communication path interface 106 transmits and receives signals to and from the higher station apparatus 30 via a given interface. Moreover, the communication path interface 106 may transmit and receive (perform backhaul signaling for) signals with other radio base stations 10 via an inter-base station interface (for example, optical fiber in compliance with Common Public Radio Interface (CPRI), and the X2 interface).

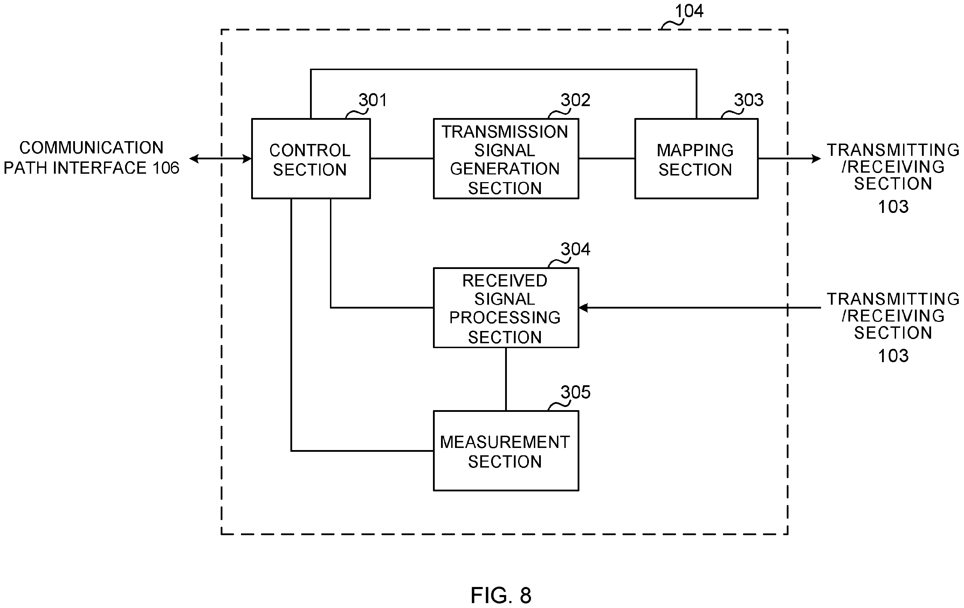

Fig. 8 is a diagram illustrating an example of a functional configuration of the radio base station according to the present embodiment. Note that, although this example will primarily show functional blocks that pertain to characteristic parts of the present embodiment, it may be assumed that the radio base station 10 has other functional blocks that are necessary for radio communication as well.

The baseband signal processing section 104 at least has a control section (scheduler) 301, a transmission signal generation section 302, a mapping section 303, a received signal processing section 304, and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present disclosure pertains.

The control section 301 controls, for example, generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls scheduling (for example, resource allocation) of system information, downlink data signals (for example, signals transmitted using a downlink shared channel), downlink control signals (for example, signals transmitted using a downlink control channel). Further, the control section 301 controls the generation of downlink control signals, downlink data signals and so on, based on the results of determining whether or not retransmission control is necessary for uplink data signals, and so on.

The control section 301 controls scheduling of synchronization signals (for example, Primary Synchronization Signal (PSS)/Secondary Synchronization Signal (SSS)), downlink reference signals (for example, CRS, CSI-RS, DMRS) and so on.

The control section 301 controls scheduling of an uplink data signal (for example, signals transmitted using an uplink shared channel), an uplink control signal (for example, signals transmitted using an uplink control channel), a random access preamble, an uplink reference signal, and so on.

The transmission signal generation section 302 generates downlink signals (downlink control signals, downlink data signals, downlink reference signals and so on) based on instructions from the control section 301, and outputs these signals to the mapping section 303. The transmission signal generation section 302 can be constituted by a signal generator, a signal generating circuit or signal generation apparatus that can be described based on general understanding of the technical field to which the present disclosure pertains.

For example, the transmission signal generation section 302 generates at least one of DL assignments, which report downlink data allocation information, and UL grants, which report uplink data allocation information, based on instructions from the control section 301. The DL assignments and the UL grants are both DCI, and follow the DCI format. Further, the downlink data signals are subjected to the coding process, the modulation process and so on, by using a coding rate and modulation schemes that are determined based on, for example, channel state information (CSI) reported from each user terminal 20.

The mapping section 303 maps the downlink signals generated in the transmission signal generation section 302 to given radio resources based on instructions from the control section 301, and outputs these to the transmitting/receiving sections 103. The mapping section 303 can be constituted by a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals include, for example, uplink signals (uplink control signals, uplink data signals, uplink reference signals, and so on) that are transmitted from the user terminals 20. The received signal processing section 304 can be constituted by a signal processor, a signal processing circuit or signal processing apparatus that can be described based on general understanding of the technical field to which the present disclosure pertains.

The received signal processing section 304 outputs, to the control section 301, information decoded by the receiving processing. For example, when a PUCCH to contain an HARQ-ACK is received, the received signal processing section 304 outputs this HARQ-ACK to the control section 301. Further, the received signal processing section 304 outputs at least one of the received signals and the signals after the receiving processes to the measurement section 305.

The measurement section 305 performs measurements with respect to the received signals. The measurement section 305 can be constituted by a measurer, a measurement circuit or measurement apparatus that can be described based on general understanding of the technical field to which the present disclosure pertains.

For example, the measurement section 305 may perform Radio Resource Management (RRM) measurements, Channel State Information (CSI) measurements and so on, based on the received signals. The measurement section 305 may measure the received power (for example, Reference Signal Received Power (RSRP)), the received quality (for example, Reference Signal Received Quality (RSRQ), Signal to Interference plus Noise Ratio (SINR), Signal to Noise Ratio (SNR)), the signal strength (for example, Received Signal Strength Indicator (RSSI)), transmission path information (for example, CSI), and so on. The measurement results may be output to the control section 301.

Note that the transmitting/receiving sections 103 may transmit one or more configuration information regarding the semi-persistent channel state information (CSI) reporting using the uplink shared channel. The transmitting/receiving sections 103 may receive the CSI transmitted from the user terminal 20.

When one or more semi-persistent CSI reporting corresponding to each of the above-described configuration information are activated, the control section 301 may control at least one of the generation and transmission of DCI that control at least one deactivation of the activated semi-persistent CSI reporting.

The control section 301 may control at least one of the generation and transmission of DCI including a first field value (which may be combined with a CSI request field or other fields, for example) indicating the deactivated semi-persistent CSI reporting.

The control section 301 may control at least one of the generation and transmission of DCI including a second field value (specific field) indicating whether or not to deactivate all semi-persistent CSI reporting.

The control section 301 may control at least one of the generation and transmission of DCI including at least one of the CI field indicating a CC that deactivate semi-persistent CSI reporting, and the BWP field indicating a BWP.

### (User Terminal)

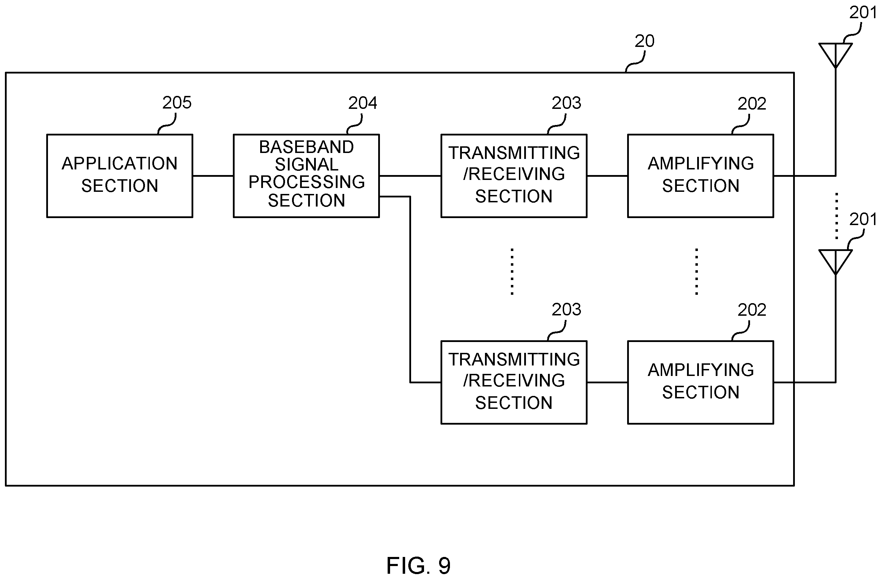

Fig. 9 is a diagram illustrating an example of an overall structure of a user terminal according to the present embodiment. The user terminal 20 has a plurality of transmitting/receiving antennas 201, amplifying sections 202, transmitting/receiving sections 203, a baseband signal processing section 204, and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving section 203 receives the downlink signal amplified in the amplifying section 202. The transmitting/receiving section 203 performs frequency conversion for the received signal into baseband signal, and outputs the baseband signal to the baseband signal processing section 204. The transmitting/receiving section 203 can be constituted by a transmitter/receiver, a transmitting/receiving circuit or transmitting/receiving apparatus that can be described based on general understanding of the technical field to which the present disclosure pertains. Note that a transmitting/receiving section 203 may be structured as a transmitting/receiving section in one entity, or may be constituted by a transmitting section and a receiving section.

The baseband signal processing section 204 performs receiving processes for the baseband signal that is input, including an FFT process, error correction decoding, a retransmission control receiving process and so on. Downlink user data is forwarded to the application section 205. The application section 205 performs processes related to higher layers above the physical layer and the MAC layer and so on. Further, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert baseband signals that are output from the baseband signal processing section 204 into a radio frequency band, and then transmit the resultant signals. The radio frequency signals having been subjected to frequency conversion in the transmitting/receiving sections 203 are amplified in the amplifying sections 202, and transmitted from the transmitting/receiving antennas 201.

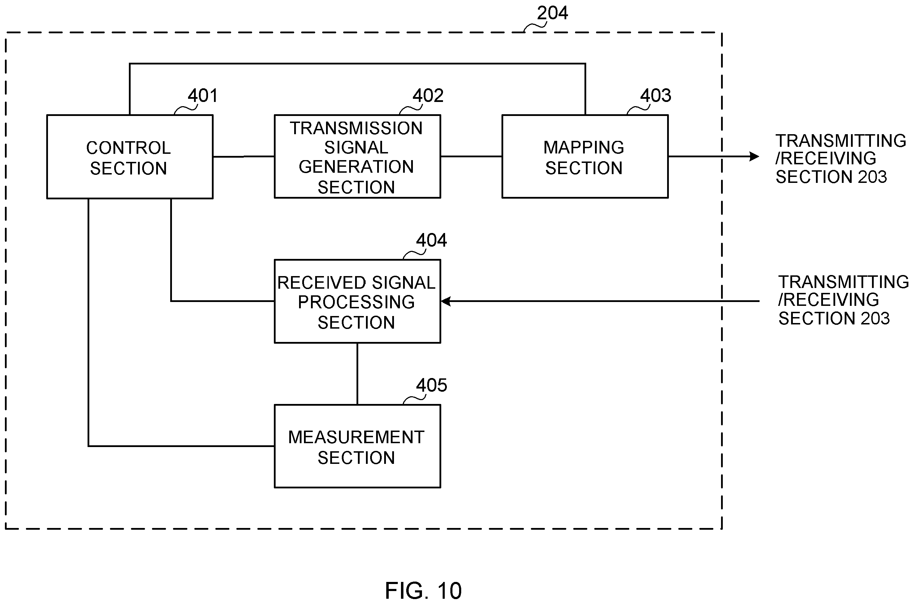

Fig. 10 is a diagram illustrating an example of a functional configuration of the user terminal according to the present embodiment. Note that, although this example will primarily show functional blocks that pertain to characteristic parts of the present embodiment, it may be assumed that the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404, and a measurement section 405. Note that these configurations may be included in the user terminal 20, and some or all of the configurations need not be included in the baseband signal processing section 204.

The control section 401 controls the whole of the user terminal 20. The control section 401 can be constituted by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processes in the received signal processing section 404, the measurements of signals in the measurement section 405 and so on.

The control section 401 acquires such as the downlink control signals and downlink data signals transmitted from the radio base station 10, via the received signal processing section 404. The control section 401 controls the generation of uplink control signals, uplink data signals and so on, based on such as the downlink control signal, as the results of determining whether or not retransmission control is necessary for downlink data signals.

When the control section 401 acquires various information reported from the radio base station 10 from the received signal processing section 404, the control section 401 may update the parameter used for control based on the information.

The transmission signal generation section 402 generates uplink signals (uplink control signals, uplink data signals, uplink reference signals and so on) based on instructions from the control section 401, and outputs these signals to the mapping section 403. The transmission signal generation section 402 can be constituted by a signal generator, a signal generating circuit or a signal generating apparatus that can be described based on general understanding of the technical field to which the present disclosure pertains.

For example, the transmission signal generation section 402 generates uplink control signals such as delivery acknowledgment information, channel state information (CSI) and so on, based on instructions from the control section 401. Further, the transmission signal generation section 402 generates uplink data signals based on instructions from the control section 401. For example, when a UL grant is included in a downlink control signal that is reported from the radio base station 10, the control section 401 instructs the transmission signal generation section 402 to generate an uplink data signal.

The mapping section 403 maps the uplink signals generated in the transmission signal generation section 402 to radio resources based on instructions from the control section 401, and outputs these to the transmitting/receiving section 203. The mapping section 403 can be constituted by a mapper, a mapping circuit or mapping apparatus that can be described based on general understanding of the technical field to which the present disclosure pertains.

The received signal processing section 404 performs receiving processes (for example, demapping, demodulation, decoding, and so on) of received signals that are input from the transmitting/receiving sections 203. Here, the received signals include, for example, downlink signals (downlink control signals, downlink data signals, downlink reference signals, and so on) that are transmitted from the radio base station 10. The received signal processing section 404 can be constituted by a signal processor, a signal processing circuit or signal processing apparatus that can be described based on general understanding of the technical field to which the present disclosure pertains. Further, the received signal processing section 404 can constitute the receiving section according to the present disclosure.

The received signal processing section 404 outputs the decoded information that is acquired through the receiving processes to the control section 401. The received signal processing section 404 outputs, for example, broadcast information, system information, RRC signaling, DCI and so on, to the control section 401. Further, the received signal processing section 404 outputs at least one of the received signals and the signals after the receiving processes to the measurement section 405.

The measurement section 405 conducts measurements with respect to the received signals. The measurement section 405 can be constituted by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, and so on), the signal strength (for example, RSSI), transmission path information (for example, CSI), and so on. The measurement results may be output to the control section 401.

Note that the transmitting/receiving sections 203 may receive one or more configuration information regarding the semi-persistent channel state information (CSI) reporting using the uplink shared channel. The transmitting/receiving section 203 may transmit the CSI to the radio base station 10.

When one or more semi-persistent CSI reporting corresponding to the above-described one or more configuration information are activated, the control section 401 may control at least one deactivation of the activated semi-persistent CSI reporting based on downlink control information (DCI).

The control section 401 may deactivate a single piece of semi-persistent CSI reporting indicated by the first field value in the DCI.

When the first field value in the DCI is a specific value, or when the first field value indicates semi-persistent CSI reporting that has not been activated, the control section 401 may deactivate all of the activated semi-persistent CSI reporting.

The control section 401 may deactivate all of the activated semi-persistent CSI reporting when a second field value in the DCI is a specific value, and the control section 401 may deactivate part of the activated semi-persistent CSI reporting based on the first field value in the DCI when the second field value is not the specific value.

The control section 401 may deactivate all of the activated semi-persistent CSI reporting in at least part of one or more component carriers or one or more bandwidth parts configured or activated on the user terminal based on the DCI.

### (Hardware Structure)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be realized by one piece of apparatus that is physically or logically aggregated, or may be realized by directly or indirectly connecting two or more physically or logically separate pieces of apparatus (via wire or wireless, for example) and using these multiple pieces of apparatus.

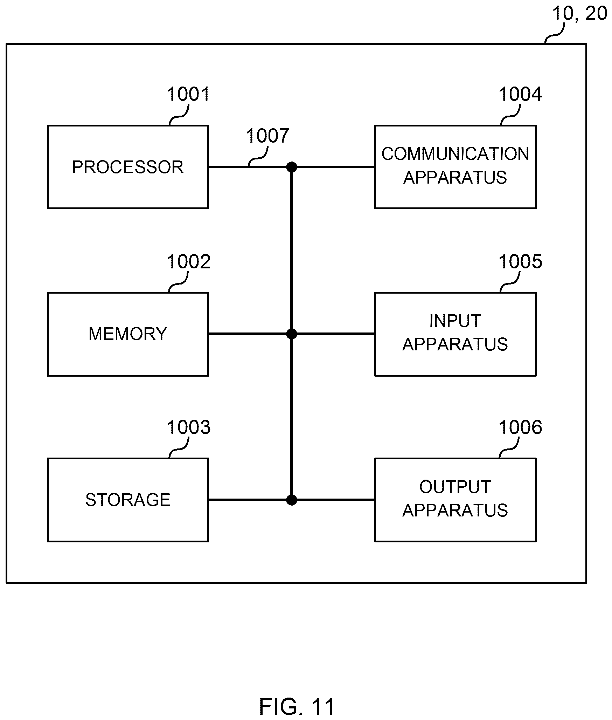

For example, the radio base station, user terminals and so on according to the present embodiment may function as a computer that executes the processes of the radio communication method of the present embodiment. Fig. 11 is a diagram illustrating an example of a hardware configuration of a radio base station and a user terminal according to the present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006, and a bus 1007.

Note that, in the following description, the word "apparatus" may be replaced by "circuit," "device," "unit" and so on. Note that the hardware structure of the radio base station 10 and the user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by reading given software (program) on hardware such as the processor 1001 and the memory 1002, and by controlling the calculations in the processor 1001, the communication in the communication apparatus 1004, and at least one of the reading and writing of data in the memory 1002 and the storage 1003.

The processor 1001 may control the whole computer by, for example, running an operating system. The processor 1001 may be configured with a central processing unit (CPU), which includes interfaces with peripheral equipment, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, or data, from at least one of the storage 1003 and the communication apparatus 1004, into the memory 1002, and executes various processes according to these. As for the programs, programs to allow computers to execute at least part of the operations described in the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a Read Only Memory (ROM), an Erasable Programmable ROM (EPROM), an Electrically EPROM (EEPROM), a Random Access Memory (RAM) and/or other appropriate storage media. The memory 1002 may be referred to as a "register," a "cache," a "main memory (primary storage apparatus)" and so on. The memory 1002 can store executable programs (program codes), software modules and/or the like for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and so on. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the radio base station 10 and the user terminal 20 may be structured to include hardware such as a microprocessor, a digital signal processor (DSP), an Application-Specific Integrated Circuit (ASIC), a Programmable Logic Device (PLD), a Field Programmable Gate Array (FPGA) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced with other terms that convey the same or similar meanings. For example, at least one of "channels" and "symbols" may be replaced by "signals" (or "signaling"). The signal may also be a message. A reference signal may be abbreviated as a "reference signal (RS)," and may be referred to as a "pilot," a "pilot signal" and so on, depending on which standard applies. Furthermore, a "component carrier (CC)" may be referred to as a "cell," a "frequency carrier," a "carrier frequency" and so on.

A radio frame may be comprised of one or more periods (frames) in the time domain. Each of one or a plurality of periods (frames) constituting a radio frame may be referred to as a "subframe." Furthermore, a subframe may be comprised of one or a plurality of slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame structure, specific filtering processing to be performed by a transceiver in the frequency domain, specific windowing processing to be performed by a transceiver in the time domain and so on.

A slot may be comprised of one or more symbols in the time domain (Orthogonal Frequency Division Multiplexing (OFDM) symbols, Single Carrier Frequency Division Multiple Access (SC-FDMA) symbols, and so on). Further, a slot may be a time unit based on numerology.

A slot may include a plurality of mini slots. Each mini slot may be comprised of one or more symbols in the time domain. Further, a mini slot may be referred to as a "subslot." Each mini slot may be comprised of fewer symbols than a slot. A PDSCH (or PUSCH) transmitted in a time unit larger than a mini slot may be referred to as "PDSCH (PUSCH) mapping type A." A PDSCH (or PUSCH) transmitted using a mini slot may be referred to as "PDSCH (PUSCH) mapping type B."

A radio frame, a subframe, a slot, a mini slot and a symbol all represent the time unit in signal communication. A radio frame, a subframe, a slot, a mini slot and a symbol may be each called by other applicable names. Note that time units such as a frame, a subframe, a slot, a mini slot, and a symbol in the present disclosure may be replaced with each other.

For example, one subframe may be referred to as a "transmission time interval (TTI)," or a plurality of consecutive subframes may be referred to as a "TTI," or one slot or mini slot may be referred to as a "TTI." That is, at least one of a subframe and a TTI may be a subframe (1 ms) in the existing LTE, may be a shorter period than 1 ms (for example, one to thirteen symbols), or may be a longer period of time than 1 ms. Note that the unit to represent the TTI may be referred to as a "slot," a "mini slot" and so on, instead of a "subframe."

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. When TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or more slots or one or more mini slots) may be the minimum time unit of scheduling. Further, the number of slots (the number of mini slots) to constitute this minimum time unit of scheduling may be controlled.

A TTI having a time length of 1 ms may be referred to as a "usual TTI" (TTI in LTE Rel. 8 to 12), a "normal TTI," a "long TTI," a "usual subframe," a "normal subframe," a "long subframe," a "slot" and so on. A TTI that is shorter than a usual TTI may be referred to as a "shortened TTI", a "short TTI", a "partial TTI" (or "fractional TTI"), a "shortened subframe", a "short subframe", a "mini slot", a "sub-slot", a "slot" and so on.

Note that a long TTI (for example, a normal TTI, a subframe, etc.) may be replaced by a TTI having a time duration exceeding 1 ms, and a short TTI (for example, a shortened TTI) may be replaced by a TTI having a TTI duration less than the TTI duration of a long TTI and not less than 1 ms.

A resource block (RB) is the unit of resource allocation in the time domain and the frequency domain, and may include one or a plurality of consecutive subcarriers in the frequency domain. The number of subcarriers included in the RB may be the same regardless of the numerology, and, for example, twelve subcarriers may be included. The number of subcarriers included in the RB may be determined based on the numerology.

Further, the RB may include one or more symbols in the time domain, and may be one slot, one mini slot, one subframe or one TTI in length. One TTI, one subframe and so on each may be comprised of one or more resource blocks.

Note that one or more RBs may be referred to as a "physical resource block (Physical RB (PRB))," a "subcarrier group (SCG)," a "resource element group (REG)," a "PRB pair," an "RB pair" and so on.

Furthermore, a resource block may be comprised of one or more resource elements (REs). For example, one RE may be a radio resource field of one subcarrier and one symbol.

A bandwidth part (BWP) (which may also be referred to as a "partial bandwidth" and so on) may represent a subset of consecutive common resource blocks (common RBs) for a certain numerology in a certain carrier. Here, the common RBs may be specified by the index of the RBs based on the common reference point of the carrier. PRBs may be defined in a BWP and numbered within the BWP.

The BWP may include a BWP for UL (UL BWP) and a BWP for DL (DL BWP). For the UE, one or more BWPs may be configured within one carrier.

At least one of the configured BWPs may be active, and the UE may not expect to send or receive any given signal/channel outside the active BWP. Note that "cell", "carrier", and so on in the present disclosure may be replaced by "BWP".

Note that the structures of radio frames, subframes, slots, mini slots, symbols and so on described above are merely examples. For example, configurations pertaining to the number of subframes included in a radio frame, the number of slots included in a subframe, the number of mini slots included in a slot, the number of symbols and RBs included in a slot or a mini slot, the number of subcarriers included in an RB, the number of symbols in a TTI, the symbol duration, the length of cyclic prefixes (CPs) and so on can be variously changed.

Further, the information and parameters described in the present disclosure may be represented in absolute values or in relative values with respect to given values, or may be represented using other applicable information. For example, a radio resource may be specified by a given index.

The names used for parameters and so on in the present disclosure are in no respect limiting. In addition, an equation and so on using these parameters may differ from those explicitly disclosed in the present disclosure. Since various channels (Physical Uplink Control CHannel (PUCCH), Physical Downlink Control CHannel (PDCCH) and so on) and information elements can be identified by any suitable names, the various names assigned to these individual channels and information elements are in no respect limiting.

The information, signals and/or others described in the present disclosure may be represented by using a variety of different technologies. For example, data, instructions, commands, information, signals, bits, symbols, and chips, all of which may be referenced throughout the herein-contained description, may be represented by voltages, currents, electromagnetic waves, magnetic fields or particles, optical fields or photons, or any combination of these.

Further, information, signals and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and so on that are input and/or output can be overwritten, updated, or appended. The information, signals, and so on that are output may be deleted. The information, signals and so on that are input may be transmitted to other pieces of apparatus.

The reporting of information is by no means limited to the aspects/embodiments described in the present disclosure, and may be performed using other methods. For example, reporting of information may be implemented by using physical layer signaling (for example, downlink control information (DCI), uplink control information (UCI), higher layer signaling (for example, Radio Resource Control (RRC) signaling, broadcast information (the master information block (MIB), system information blocks (SIBs) and so on), Medium Access Control (MAC) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Further, RRC signaling may be referred to as "RRC messages," and can be, for example, an RRC connection setup message, RRC connection reconfiguration message, and so on. Further, MAC signaling may be reported using, for example, MAC control elements (MAC CEs (Control Elements)).

Further, reporting of given information (for example, reporting of information to the effect that "X holds") does not necessarily have to be sent explicitly, and can be sent implicitly (for example, by not reporting this piece of information, by reporting another piece of information, and so on).

Decisions may be made in values represented by one bit (0 or 1), may be made in Boolean values that represent true or false, or may be made by comparing numerical values (for example, comparison against a given value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Further, software, commands, information and so on may be transmitted and received via communication media. For example, when software is transmitted from a website, a server or other remote sources by using at least one of wired technologies (coaxial cables, optical fiber cables, twisted-pair cables, digital subscriber lines (DSLs), and the like) and wireless technologies (infrared radiation, microwaves, and the like), at least one of these wired technologies and wireless technologies are also included in the definition of communication media.

The terms "system" and "network" as used in the present disclosure are used interchangeably.

In the present disclosure, the terms such as "base station (Base Station (BS))", "radio base station", "fixed station", "NodeB", "eNodeB (eNB)", "gNodeB (gNB)", "access point", "transmission point", "reception point", "transmission/reception point", "cell", "sector", "cell group", "carrier," and "component carrier" may be used interchangeably. The base station may be referred to as a term such as a macro cell, a small cell, a femto cell, a pico cell, and the like.

A base station can accommodate one or more (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to all or part of the coverage area of at least one of a base station and a base station subsystem that provides communication services within this coverage.

In the present disclosure, the terms "mobile station (MS)", "user terminal", "user equipment (UE)", "terminal", etc. may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other suitable terms.

At least one of a base station and a mobile station may be referred to as "transmitting apparatus," "receiving apparatus" and so on. Note that at least one of the base station and the mobile station may be a device mounted on a mobile unit, a mobile unit itself, or the like. The mobile unit may be a vehicle (such as a car, an airplane, for example), an unmanned mobile unit (such as a drone, an autonomous vehicle, for example), or a robot (manned or unmanned). Note that at least one of the base station and the mobile station also includes a device that does not necessarily move during a communication operation.

Furthermore, the radio base stations in the present disclosure may be replaced by user terminals. For example, each aspect/embodiment of the present disclosure may be applied to a configuration in which communication between a radio base station and a user terminal is replaced by communication among a plurality of user terminals (which may be referred to as, for example, "Device-to-Device (D2D)," "Vehicle-to-Everything (V2X)" and so on). In this case, the user terminals 20 may have the functions of the radio base stations 10 described above. In addition, the wording such as "up" and "down" may be replaced with the wording corresponding to the terminal-to-terminal communication (for example, "side"). For example, an uplink channel and a downlink channel may be interpreted as a side channel.

Likewise, the user terminals in the present disclosure may be interpreted as radio base stations. In this case, the radio base stations 10 may have the functions of the user terminals 20 described above.

Certain actions that have been described in the present disclosure to be performed by base stations may, in some cases, be performed by their upper nodes. In a network comprised of one or more network nodes with base stations, it is clear that various operations that are performed so as to communicate with terminals can be performed by base stations, one or more network nodes (for example, Mobility Management Entities (MMEs), Serving-Gateways (S-GWs) and so on may be possible, but these are not limiting) other than base stations, or combinations of these.

The aspects/embodiments illustrated in the present disclosure may be used individually or in combinations, which may be switched depending on the mode of implementation. Further, the order of processes, sequences, flowcharts and so on that have been used to describe the aspects/embodiments in the present disclosure may be reordered as long as inconsistencies do not arise. For example, although various methods have been illustrated in the present disclosure with various components of steps using exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-RAT (Radio Access Technology), New Radio (NR), New radio access (NX), Future generation radio access (FX), GSM (registered trademark) (Global System for Mobile communications), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and/or next generation systems that are enhanced based on these. Further, a plurality of systems may be combined and applied (for example, a combination of LTE or LTE-A and 5G).

The phrase "based on" as used in the present disclosure does not mean "based only on", unless otherwise specified. In other words, the phrase "based on" means both "based only on" and "based at least on."

Reference to elements with designations such as "first," "second" and so on as used in the present disclosure does not generally limit the number/quantity or order of these elements. These designations are used in the present disclosure only for convenience, as a method for distinguishing between two or more elements. In this way, reference to the first and second elements does not imply that only two elements may be employed, or that the first element must precede the second element in some way.

The terms "judge" and "determine" as used in the present disclosure may encompass a wide variety of actions. For example, to "judge" and "determine" as used herein may be interpreted to mean making judgements and determinations related to judging, calculating, computing, processing, deriving, investigating, looking up (for example, searching table, database or some other data structures), ascertaining and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge" and "determine" as used herein may be interpreted to mean "assuming", "expecting", "considering" and so on.

As used in the present disclosure, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced by "access".

As used in the present disclosure, when two elements are connected, these elements may be considered "connected" or "coupled" to each other by using one or more electrical wires, cables, printed electrical connections, and so on, and, as some non-limiting and non-inclusive examples, by using such as electromagnetic energy having wavelengths in the radio frequency, microwave, and optical (both visible and invisible) domains.

In the present disclosure, the phrase "A and B are different" may mean "A and B are different from each other." Note that the term may mean that "A and B are different from C." The terms such as "leave" "coupled" and so on may be interpreted as "different."

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, where translations add articles, such as a, an, and the in English, the present disclosure may include that the noun that follows these articles is in the plural.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of the claims. Consequently, the description in the present disclosure is provided only for the purpose of explaining examples, and should by no means be construed to limit the invention according to the present disclosure in any way.

## Claims

1. A user terminal, comprising:
a receiving section that receives one or more configuration information regarding semi-persistent channel state information (CSI) reporting using an uplink shared channel; and
a control section that controls at least one of deactivations of activated semi-persistent CSI reporting based on downlink control information (DCI), when one or more semi-persistent CSI reporting each corresponding to the one or more configuration information are activated.

2. The user terminal according to claim 1, wherein the control section deactivates a single semi-persistent CSI reporting indicated by a first field value in the DCI.

3. The user terminal according to claim 1 or 2, wherein when the first field value in the DCI is a specific value, or when the first field value indicates semi-persistent CSI reporting that has not been activated, the control section deactivates all of the activated semi-persistent CSI reporting.

4. The user terminal according to claim 1, wherein when a second field value in the DCI is a specific value, the control section deactivates all of the activated semi-persistent CSI reporting, and when the second field value is not the specific value, the control section deactivates part of the activated semi-persistent CSI reporting based on a first field value in the DCI.

5. The user terminal according to claim 1, wherein the control section deactivates all of the activated semi-persistent CSI reporting in at least part of one or more component carriers or one or more bandwidth parts configured or activated on the user terminal based on the DCI.

6. A radio communication method, comprising steps of:
receiving one or more configuration information regarding semi-persistent channel state information (CSI) reporting using an uplink shared channel; and
controlling at least one of deactivations of activated semi-persistent CSI reporting based on downlink control information (DCI), when the one or more semi-persistent CSI reporting each corresponding to the one or more configuration information are activated.
